# EUROPÄISCHE PATENTSCHRIFT

(11) **EP 3 620 264 B1**
(45) Veröffentlichungstag und Bekanntmachung des Hinweises auf die Patenterteilung: **30.10.2024**
(21) Anmeldenummer: 18192953.0
(22) Anmeldetag: 06.09.2018
(51) Int. Cl.: B25B 27/10, B21D 39/04

(54) **PRESSMASCHINE MIT EINEM ANHAND VON AUFGENOMMEN PRESSDATEN GESTEUERTEM ANTRIEB**
PRESS MACHINE COMPRISING A DRIVE CONTROLLED USING RECORDED PRESS DATA
MACHINE À PRESSER DOTÉE D'UN ENTRAINEMENT COMMANDÉ EN FONCTION DES DONNÉES DE PRESSAGE ENREGISTRÉES

(43) Veröffentlichungstag der Anmeldung: 11.03.2020
(73) Patentinhaber: Emerson Professional Tools AG, 4450 Sissach (CH)
(72) Erfinder: RUCH, Matthias, 79588 Efringen-Kirchen (DE); KREUZER, Rudolf, 5033 Buchs (CH)
(74) Vertreter: Mader, Joachim

(56) Entgegenhaltungen:
- EP-A1- 3 299 126
- WO-A1-2016/198973
- DE-A1- 102008 024 018
- DE-B3- 102013 203 553
- DE-B3- 102013 219 159
- US-A1- 2017 087 709

## Beschreibung

### 1. Technisches Gebiet

Die vorliegende Erfindung betrifft eine Pressmaschine zum plastischen Verformen eines rohrförmigen Werkstücks, insbesondere eines Fittings. Ferner betrifft die Erfindung ein Verfahren zum Betreiben einer solchen Pressmaschine, Pressbacken zum Koppeln an eine Pressmaschine, als auch ein rohrförmiges Werkstück, insbesondere Fitting.

### 2. Technischer Hintergrund

Im Stand der Technik sind mehrere Verfahren zum Verbinden von rohrförmigen Werkstücken bekannt. Beispielsweise können Rohre miteinander verlötet oder verschweißt werden. Weiterhin ist bekannt, das Ende eines kleinen Rohres in ein Rohrende eines größeren Rohres einzustecken und anschließend beide Rohrenden miteinander zu verpressen. In anderen Fällen wird das Verpressen mit Hilfe eines (Press-)Fittings durchgeführt. Dazu können Pressmaschinen, wie beispielsweise Rohrpressmaschinen, verwendet werden, um ein Rohr mit einem Pressfitting zu verbinden. Ein solches Fitting kann zum Beispiel als Rohrleitungsfitting ausgestaltet sein, welches als Verbindungsstück einer Rohrleitung verwendet werden kann. Ein Fitting kann aus verschiedenen Materialien bestehen, beispielsweise aus Kupfer, Aluminium, Kunststoff, Komposit und/oder (Edel-)Stahl.

Eine (Rohr-)Pressmaschine kann Pressbacken aus Metallen wie z.B. Stahl, Aluminium o.ä. umfassen, die austauschbar sein können. Weiterhin kann die Pressmaschine eine austauschbare Presszange umfassen, die die Pressbacken aufweist. Andere Pressbackenanordnungen, umfassend Pressbacken sind ebenso bekannt. Mittels der Pressbacken bzw. der Pressbackenanordnung kann eine Kraft auf das Fitting ausgeübt werden kann, um es derart plastisch zu verformen, sodass das Fitting möglichst schlüssig, dicht und fest an einem Rohr anliegt. Beim Einsatz einer solchen Pressmaschine können die Pressbacken dabei zusammengedrückt werden, um ein dazwischen angeordnetes Fitting über ein Rohr zu verpressen. Die Pressmaschine kann handgeführt sein, und durch einen Antrieb betrieben werden. Typischerweise kommen elektrische und/oder hydraulische Antriebe zum Einsatz.

Typischerweise sind die Pressbacken bzw. die Pressbackenanordnung werkstückspezifisch. Beispielsweise kommen zum Verpressen von Metallfittings, wie Kupfer-, oder (Edel-)stahlfittings andere Pressbacken/Pressbackenanordnungen zum Einsatz, als beim Verpressen von Kunststofffittings. Die Pressmaschine kann durch den Austausch der Pressbacken/Pressbackenanordnung an unterschiedliche Werkstücke, insbesondere Fittings, angepasst werden. Üblicherweise erfolgt das Verpressen beim Einsatz solch herkömmlicher Pressmaschinen immer unter Anwendung der maximalen Presskraft, unabhängig von den tatsächlich verwendeten Pressbacken bzw. der verwendeten Pressbackenanordnung und/oder den verwendeten Fittings. Dies kann jedoch nachteilhaft sein, da beispielsweise Kunststofffittings im Vergleich zu Metallfittings mit einer sehr viel geringeren Presskraft verpresst werden können. Das Aufwenden der maximalen Presskraft führt somit zu einer unnötigen Energieverschwendung und gegebenenfalls zu einer Beschädigung des Fittings und der zu verbindenden Rohre.

Zudem weist jede Art von verwendeten Pressbacken bzw. verwendeter Pressbackenanordnung ihre charakteristische Presscharakteristika auf. Die Presscharakteristika können beispielsweise von dem Übersetzungsverhältnis der Pressbackenanordnung, dem Material der Pressbacken und dem zu verpressenden Werkstück abhängen. Beispielsweise sollte ein Werkstück, wie ein Fitting aus Stahl anders verpresst werden als beispielsweise ein Fitting aus Kunststoff, auch um einen möglichst optimalen Formschluss und eine lange Haltbarkeit des verpressten Fittings zu garantieren. Zudem sind die Pressvorgänge unterschiedlich für Fittings mit unterschiedlicher Abmaßung, da z.B. die Pressbacken während des Pressvorgangs bei einem Fitting mit kleinerem Durchmesser erst später in das Fitting eingreifen.

Die Druckschrift DE 10 2013 203 553 B3 offenbart ein handgeführtes Pressgerät, bei dem zur Überprüfung des Pressvorgangs die Presskraft und/oder deren Verlauf innerhalb des Pressvorgangs erfasst wird. Die ermittelte Presskraft wird mit einem vorgegebenen Verlauf verglichen. Fallen die ermittelten Daten nicht in einen Bereich um den vorgegebenen Verlauf, wird ein Fehler erzeugt, der vorzugsweise von einer externen Anzeigevorrichtung dem Benutzer angezeigt wird.

Die Druckschrift DE 10 2008 024 018 A1 offenbart ein Verfahren zum Betreiben eines motorisch betriebenen Hand-Verpressgeräts. Nachdem die vorgegebene Verpresskraft erreicht ist oder eine vorgegebene Zeit verstrichen ist, erfolgt bei diesem Hand-Verpressgerät der Rücklauf des Presskolbens nur bis zu einer Zwischenposition und nicht bis zu dessen Ausgangsposition. Die Zwischenposition wird mittels eines im Gerät gespeicherten Weg-Wertes oder Zeitmaßes bestimmt.

Die Druckschrift WO 2016/198973 A1 offenbart ein tragbares Kompressions- oder Schneidsystem für den mobilen Einsatz und ein Verfahren für seinem Betrieb.

Aus der US2017/087709 A1 ist eine Pressmaschine nach dem Oberbegriff von Anspruch 1 bekannt.

Der vorliegenden Erfindung liegt somit die Aufgabe zu Grunde, ein möglichst optimales und materialschonendes Verpressen eines Fittings mit einem Rohr zu erzielen. Dabei soll insbesondere eine verbesserte (Rohr-)Pressmaschine bereitgestellt werden, welche ein solches Verpressen ermöglicht. Diese und weitere Aufgaben, die für den Fachmann aus der folgenden Beschreibung ersichtlich werden, werden durch eine Pressmaschine gemäß Anspruch 1 und ein Verfahren zum Betreiben einer Pressmaschine gemäß Anspruch 9 gelöst.

### 3. Beschreibung der Erfindung

Die vorliegende Erfindung betrifft eine Pressmaschine, zum plastischen Verformen eines rohrförmigen Werkstücks, insbesondere eines Fittings, die Pressmaschine umfassend: Pressbacken, einen Antrieb, eingerichtet zum Antreiben der Pressbacken, um eine Kraft auf das Werkstück aufzubringen, ein Sensorsystem, welches eingerichtet ist einen Pressdatensatz während eines Pressvorgangs aufzunehmen und eine Steuerung, die eingerichtet ist, anhand des aufgenommenen Pressdatensatzes den Antrieb zu steuern. Das rohrförmige Werkstück kann dabei beispielsweise ein Fitting sein, welches zum Verbinden zweier Rohre mit diesen verpresst wird. Das Fitting kann dabei beispielsweise zumindest teilweise aus Kupfer, Aluminium, Kunststoff, Komposit und/oder (Edel-)Stahl bestehen. Die Pressmaschine wiederum kann eingerichtet sein, um ein solches rohrförmiges Werkstück, wie beispielweise ein Fitting, derart plastisch zu verformen, dass es mit einem im Fitting angeordneten Rohrleitungsstück verbunden wird. Insbesondere kann mittels der Pressmaschine ein (Ver-)Pressen durchgeführt werden, um ein Fitting mit einem Rohr form- und/oder kraftschlüssig unlösbar miteinander zu verbinden. Das Fitting kann beispielsweise gemäß der Norm DIN EN 1254-7 spezifiziert sein. Die Pressbacken können relativ zueinander beweglich sein, und beispielsweise geschlossen werden und auch auseinandergefahren werden, sodass im auseinandergefahrenen Zustand beispielsweise ein rohrförmiges Werkstück zwischen den Pressbacken angeordnet werden kann. Die Pressbacken können austauschbar sein, und Backen zum Pressen, Crimpen, oder Schneiden aufweisen. Beispielsweise kann die Pressmaschine zwei Pressbacken aufweisen. Der Antrieb kann einen Elektromotor, eine pneumatische und/oder eine hydraulische Antriebseinheit sowie ein Getriebe umfassen. Mittels des Antriebs können die Pressbacken der Pressbackenanordnung relativ zueinander bewegt werden, und etwa in den geschlossenen Zustand getrieben werden. Der Antrieb kann dabei zumindest teilweise die Kraft aufbringen, die notwendig ist, um das rohrförmige Werkstück zu verformen, beispielsweise um ein Fitting mit einem Rohrleitungsstück zu verbinden. Hierzu kann der Antrieb direkt oder über ein Getriebe mit den Pressbacken verbunden sein, um die Antriebskraft auf Presspacken zu übertragen. Die auf die Pressbacken wirkende Kraft kann dabei variabel eingestellt werden, indem beispielsweise Motorparameter oder andere Parameter (wie etwa Getriebeeinstellungen) entsprechend variiert werden. Der Pressdatensatz umfasst hierbei mindestens zwei Pressdatenwerte, wobei Pressdaten beispielsweise ein Pressdruck oder eine Presskraft sein können, die von den Pressbacken auf das Fitting ausgeübt werden. Der Pressdruck kann über Sensoren auch indirekt über die Stromaufnahme oder Leistungsaufnahme des Motors bestimmt werden. Im Verlauf des Pressvorgangs können die Pressdaten mit fortlaufender Zeit während des Pressvorgangs variieren. Auch können die Pressdaten bezüglich eines Hubwegs eines Arbeitskolbens variieren. Der Hubweg des Arbeitskolbens kann beispielsweise aus der Motorendrehzahl abgeleitet werden. Die Motorendrehzahl über die Zeit ergibt die Hübe des Pumpkolbens, woraus sich die Menge an gepumpten Öl bestimmt und hieraus die Füllung des Arbeitszylinders berechnen lässt. Somit kann dann der Weg des Arbeitskolbens bestimmt werden. Der Fachmann versteht, dass die vorliegende Erfindung nicht auf die vorgenannten Parameter beschränkt ist, sondern dass jede geeignete Messgröße umfasst ist, welche den Pressvorgang der Pressmaschine zum plastischen Verformen eines Werkstücks während des Verpressens geeignet charakterisiert. Der Pressdatensatz kann hierbei von einem Anfangszustand, beispielswiese bei maximal geöffneten Pressbacken, aufgenommen werden bis zu einem Endzustand, bei welchem die Pressbacken vollständig geschlossen sind, und so das Werkstück fertig plastisch verformt. Auch kann der Pressdatensatz beginnend von einem späteren Zeitpunkt während des Pressvorgangs aufgenommen werden und/oder die Aufnahme kann zu einem früheren Zeitpunkt vor dem Ende des Pressvorgangs beendet werden. Voraussetzung ist, dass der aufgenommene Pressdatensatz geeignet ist den Pressvorgang zu charakterisieren und so eine entsprechend angepasste Steuerung des Antriebs ermöglicht. Das Sensorsystem kann hierzu entsprechende Erfassungsmittel umfassen, beispielsweise einen oder mehrere Sensoren, welche die zuvor genannten Pressdaten ermitteln. Weiter kann das Sensorsystem entsprechende Auswertemittel umfassen, welche beispielsweise mittels eines Prozessors und/oder eines Speichers mit entsprechendem Programmcode ausgestaltet sein kann. Das Erfassungsmittel kann dabei separat zum Auswertemittel an der Pressmaschine bereitgestellt sein. Das Sensorsystem kann dabei über eine an der Pressmaschine angeordneten Energiequelle versorgt werden, welche auch den Antrieb versorgen kann. Das Sensorsystem kann hierbei eingerichtet sein, um den Pressdatensatz zu der Steuerung zu übertragen oder bereitzustellen, so dass der Antrieb entsprechend gesteuert werden kann. Das Sensorsystem kann dabei beispielsweise mittels eines Schalters durch einen Nutzer aktiviert oder deaktiviert werden, um eine Steuerung des Antriebs anhand des aufgenommenen Pressdatensatzes zu aktivieren oder zu deaktivieren. Die aufgenommenen Pressdaten können hierbei von den verwendeten Pressbacken oder dem Werkstück, wie z.B. dem Fitting abhängen, so dass je nach geometrischer Anordnung oder Material unterschiedliche Pressdaten während des Pressvorgangs erhalten werden. Somit kann die Steuerung des Antriebs optimal auf ein bestimmtes Werkstück und/oder bestimmte Pressbacken angepasst werden. Die Pressmaschine kann so eine individuelle Presskraft mittels des Antriebs aufbringen, um eine optimale und materialschonende Verformung des Werkstücks zu erzielen. Die Verwendung des Sensorsystems erlaubt es dabei die Pressbacken und/oder das Werkstück automatisch zu identifizieren, was es beispielsweise eine automatische Anpassung der Steuerung des Antriebs im Betrieb ermöglicht, so dass der Bediener der Pressmaschine selbst keine manuellen Eingaben tätigen muss und dementsprechend nicht zusätzlich belastet wird. Dadurch kann das Risiko einer Fehlbelastung reduziert werden. Die vorliegende Erfindung kann beispielsweise im Elektrobereich bei Verpressungen, Schneiden und Lochstanzen zum Einsatz kommen. Weiter kann das erfindungsgemäße Steuern des Antriebs ein Abschalten des Antriebs umfassen, was Energie spart und ein unnötiges Aufbringen von Kraft von den Pressbacken auf das Werkstück vermeidet. Hierdurch kann sowohl das verpresste Werkstück als auch die erfindungsmäße Pressmaschine geschont werden.

Die Pressmaschine umfasst ein Speichermedium mit einer Datenbank, welche zumindest einen gespeicherten Pressdatensatz für einen Pressvorgang von zumindest einer Art von Pressbacken und/oder zumindest einer Art von rohrförmige Werkstücken umfasst. Die Datenbank kann dabei Pressdatensätze für ein oder mehrere Pressbackenarten und/oder Werkstückarten beinhalten. Die Arten der gespeicherten Pressbacken und Werkstücke definieren sich beispielsweise über ihre geometrische Ausgestaltung oder ihr Material. Das Speichermedium kann dabei auch modular mit der Pressmaschine verbunden werden. Somit kann, je nachdem, welche rohrförmigen Werkstücke und/oder Pressbacken zum Einsatz kommen unterschiedliche Speichermedien mit einem oder mehreren gespeicherten Sätzen von Pressdaten für entsprechende Pressvorgänge bereitgestellt werden. Beispielsweise kann über eine (kabelgebundene oder kabellose) Schnittstelle auf die Datenbank zugegriffen werden, um beispielsweise den Inhalt der Datenbank zu aktualisieren.

Die Pressmaschine umfasst, dass die Steuerung eingerichtet ist den aufgenommenen Pressdatensatz mit dem zumindest einen gespeicherten Pressdatensatz zu vergleichen und den Antrieb anhand des aufgenommenen Pressdatensatzes zu steuern, wenn der zumindest eine aufgenommene Pressdatensatz zumindest einem entsprechenden gespeicherten Pressdatensatz zugeordnet wird. Das Speichermedium kann entsprechende Steuerparameter zum Steuern der Pressmaschine beinhalten, welche entsprechenden Pressdatensätzen zugeordnet sind. Die in der Datenbank enthaltenen Pressdaten können mit dem vom Sensorsystem aufgenommenen Pressdatensatz verglichen werden, so dass der Antrieb bei Übereinstimmung eines Pressdatensatzes entsprechend gesteuert werden kann. Somit kann der Antrieb gemäß der verwendeten und vom Sensorsystem erkannten Pressbacken und/oder des Werkstücks bereits während des Pressvorgangs geeignet gesteuert werden. Auch können die für Steuerung der Pressmaschine geeigneten Parameter, welche anhand des aufgenommenen Pressdatensatzes ermittelt wurden, einem Nutzer breitgestellt werden, so dass diese dann von einem Nutzer manuell eingestellt werden können. Wenn keine Übereinstimmung zwischen dem aufgenommenen Pressdatensatz und einem gespeicherten Pressdatensatz vorliegt, so kann keine Zuordnung zwischen dem aufgenommenen und dem gespeicherten Pressdatensatz erfolgen. Dann kann der Antrieb gemäß anderer voreingestellter Parameter gesteuert werden, so dass auch bei Nichterkennen der Pressbacken und/oder des Werkstücks ein sicheres Verpressen gewährleistet wird.

Weiter bevorzugt umfasst die Pressmaschine, dass die Datenbank zumindest einen spezifischen Steuerparameter zum Steuern des Antriebs umfasst, wobei der zumindest eine spezifische Steuerparameter einem entsprechenden gespeicherten Pressdatensatz zugeordnet ist, wobei der zumindest eine spezifische Steuerparameter Pressparameter umfasst, insbesondere eine maximale Presskraft, einen Pressweg und/oder eine Pressdauer und/oder wobei der zumindest eine spezifische Steuerparameter Antriebsparameter umfasst, insbesondere eine Antriebsdrehzahl, Antriebsleistung und/oder einen Öldruck. Die Steuerparameter aus der Datenbank können entsprechend verwendet werden, um den Antrieb betreiben. Beispielsweise können Steuerparameter für Edelstahlfittings und davon verschiedene Steuerparameter für Kupferfittings in der Datenbank hinterlegt sein. Abhängig davon, ob mittels des Sensorsystems entsprechende Fittings und/oder entsprechende Pressbacken erkannt wurden, können die entsprechenden Steuerparameter aus der Datenbank geladen werden und von der Steuerung verwendet werden, um den Antrieb und letztlich die Pressmaschine zu steuern. Dabei können für unterschiedliche Charakteristika der Pressmaschine (z.B. Übersetzungsverhältnis, Art der Pressbacken, Größe des zu verpressenden Werkstücks, Material des zu verpressenden Werkstücks, und/oder Form des zu verpressenden Werkstücks) entsprechende Steuerparameter in der Datenbank hinterlegt sein, um ein optimales Verpressen oder Verformen des jeweiligen Werkstücks zu ermöglichen. Abhängig von der Art der Pressbackenanordnung, bzw. der mittels der Pressbackenanordnung zu verpressenden Werkstückart können somit beispielsweise bestimmte Presskräfte, Pressgeschwindigkeiten, Presswege und/oder Pressdauern vorgegeben werden, welche von der Pressmaschine etwa zum Verpressen oder Verformen des Fittings mit einem Rohrleitungsstück verwendet werden sollen. Diese Parameter können beispielsweise in Form einer Presskurve vorgegeben werden, die einen zeitlichen Verlauf von Presskraft, Pressweg und/oder Pressgeschwindigkeit vorgibt. Der Fachmann versteht dabei, je nach Verwendungszweck der Pressmaschine entsprechende Steuerparameter in der Datenbank zu hinterlegen. Auch können verschiedene Antriebsparameter in der Datenbank hinterlegt werden, welche basierend auf der identifizierten Pressbackenanordnung geladen werden können, um letztlich das (identifzierte) Werkstück zu verformen. Der Fachmann versteht, dass die Pressparameter oder Antriebsparameter, Motor- und/oder Getriebeparameter umfassen können, welche die Kraftübertragung vom Antrieb auf die Pressbacken regeln können.

Weiter bevorzugt umfasst die Pressmaschine, dass der Antrieb anhand des zumindest eines spezifischen Steuerparameters gesteuert wird, wenn der zumindest eine aufgenommene Pressdatensatz zumindest einem entsprechenden gespeicherten Pressdatensatz zugeordnet wird. Somit kann die Pressmaschine anhand der ermittelten Pressdaten spezifisch angesteuert werden, sodass nicht auf eine allgemeine, unspezifische, d.h. von dem verwendeten Werkstück und/oder den verwendeten Pressbacken unabhängige Steuerungsparameter zurückgegriffen werden muss. Somit kann verhindert werden, dass unnötig viel Presskraft oder Pressdruck auf das Werkstück aufgebracht wird oder dass der Pressvorgang unnötig lange dauert.

Weiter bevorzugt umfasst die Pressmaschine, dass der Antrieb eingerichtet ist, anhand unspezifischer Steuerparameter gesteuert zu werden, wenn der zumindest eine aufgenommene Pressdatensatz nicht zumindest einem entsprechenden gespeicherten Pressdatensatz zugeordnet wird, wobei der zumindest eine unspezifische Steuerparameter Pressparameter umfasst, insbesondere eine maximale Presskraft, einen Pressweg und/oder eine Pressdauer und/oder wobei der zumindest eine spezifische Steuerparameter Antriebsparameter umfasst, insbesondere eine Antriebsdrehzahl, Antriebsleistung und/oder einen Öldruck. Die unspezifischen Steuerparameter können beispielsweise so definiert sein, dass unabhängig von den verwendeten Pressbacken und/oder dem zu verpressenden Werkstück ein sicheres Verpressen gewährleistet wird. Weiter kann die Pressmaschine so eingerichtet sein, dass sie anhand unspezifischer Steuerparameter gesteuert wird, wenn beispielsweise die keine Parameter von dem Sensorsystem für das ansteuern der Steuerung vorliegen. Auch kann es vorgesehen sein, dass ein Nutzer auswählen kann ob die Pressmaschine die anhand der aufgenommenen Pressparameter spezifischen Steuerparameter verwenden soll oder nicht. Der Fachmann versteht, dass für die Pressparameter der unspezifischen Steuerparameter das bezüglich der Pressparameter der spezifischen Steuerparameter zuvor Genannte entsprechend gilt.

Weiter bevorzugt umfasst die Pressmaschine, dass das Sensorsystem eingerichtet ist zur Merkmalserkennung von charakteristischen Merkmalen der Pressbacken und/oder des Werkstücks, insbesondere zur Erkennung von charakteristischen geometrischen und/oder materialspezifischen Merkmalen anhand des aufgenommenen Pressdatensatzes. Beispielsweise kann mittels des Sensorsystems eine Form und/oder Größe des Werkstücks bzw. der verwendeten Pressbacken erkannt werden. Anhand dieser charakteristischen Merkmale kann das Werkstück zumindest seiner Art nach identifiziert werden und anschließend der Motor entsprechend angesteuert werden, um das Werkstück optimal zu verformen. Bestimmte geometrische Merkmale von Werkstücken und Pressbacken können dabei mit Pressdatensätzen verknüpft sein, sodass bestimmte charakteristische Merkmale von Pressbacken und Werkstücken bestimmten Pressdatensätzen zugeordnet sind. Somit kann es ermöglicht werden, dass für mehrere aufeinanderfolgende Pressvorgänge unterschiedliche Kombinationen von Materialen und/oder geometrischen Merkmalen der Werkstücke und Pressbacken verwendet werden können, ohne dass eine manuelle Eingabe eines Nutzers zur Steuerung der Pressmaschine erfolgen muss. Somit wird bei jedem Pressvorgang ein optimales Verformen des Werkstücks unter den entsprechenden Bedingungen der verwendeten Pressbacken bzw. des verwendeten Werkstücks ermöglicht.

Weiter bevorzugt umfasst die Pressmaschine einen Protokollspeicher, welcher eingerichtet ist zum Speichern der Sensordaten und/oder Steuerungsdaten. Dadurch kann der Verformungsvorgang nachverfolgbar gestaltet werden. Alle oder einige Daten zum Verformungsvorgang können in dem Protokollspeicher abgespeichert werden, um auch eine Qualitätsüberwachung einzelner Verformungen zu ermöglichen. Auf den Protokollspeicher kann über eine (kabellose oder kabelgebundene) Schnittstelle zugegriffen werden, um die entsprechenden Daten auszulesen.

Die Pressmaschine umfasst, dass der zumindest eine aufgenommene Pressdatensatz eine erste Presskurve darstellt und wobei der zumindest eine gespeicherte Pressdatensatz eine zweite Presskurve darstellt und wobei die Verläufe der ersten und der zweiten Presskurve auf Übereinstimmung überprüft werden und wobei der Antrieb bei Übereinstimmung der ersten und zweiten Presskurve entsprechend des gespeicherten Pressdatensatzes gesteuert wird, wenn die erste Presskurve mit der zweiten Presskurve übereinstimmt. Somit ist die Pressmaschine eingerichtet um eine tatsächliche Presskurve mit einer gespeicherten Presskurve zu vergleichen. Basierend auf dem Vergleich kann dann das verwendete Werkstück und/oder die verwendeten Pressbacken identifiziert werden. Die Presskurve kann sich dabei beispielsweise aus dem zeitlichen Verlauf des Drucks im Arbeitszylinder während des Pressvorgangs oder aus dem Verlauf des Drucks bezüglich eines zurückgelegten Wegs des Arbeitskolbens der Pressmaschine ergeben. Dem Fachmann sind eine Vielzahl geeigneter Verfahren für ein Vergleichen der Presskurven bekannt, beispielsweise über ein Vergleichen der aufgenommenen Pressdatenpunkte bei verschiedenen Wegpunkten des Arbeitskolbens, über Bilden von Ableitungen der Presskurve und bestimmen und vergleichen von Steigungen der Presskurve, beispielsweise mittels gängiger Software.

Weiter bevorzugt kann die Pressmaschine ein elektrisch angetriebenes hydraulisches oder mechanisches Handpressgerät sein. Mit Hilfe eines Handpressgeräts können Verpressungen an verschiedenen Einsatzorten, wie einer Baustelle, flexibel vorgenommen werden. Dabei können elektrisch angetriebene Anpressgeräte hohe Presskräfte aufbringen, die eine zuverlässige Verpressung gewährleisten. In einem hydraulischen Handpressgerät kann beispielsweise ein Hydraulikdruck bis ca. 550 bar aufgebracht werden, welcher unmittelbar auf das von den Pressbacken eingeschlossene Werkstück wirkt.

Weiter umfasst die Erfindung ein Verfahren zum Betreiben der erfindungsgemäßen Pressmaschine zum plastischen Verformen eines rohrförmigen Werkstücks, insbesondere eines Fittings, nach Anspruch 9.

Weiter bevorzugt umfasst das Verfahren, dass anhand des aufgenommen Pressdatensatzes eine plastische Verformung des Werkstücks während des Pressvorgangs ermittelt wird, wobei das Steuern ein Stoppen des Motors umfasst, wenn ermittelt wird, dass keine plastische Verformung des Werkstücks mehr stattfindet. Somit kann sichergestellt werden, dass keine unnötige Kraft von den Pressbacken auf das Werkstück aufgebracht wird, wenn keine plastische Verformung mehr stattfindet. Das reduziert die Pressdauer, spart Energie und kann das zu verpressende Werkstück von Beschädigungen durch einen zu hohen Pressdruck schützen.

Weiter bevorzugt umfasst das Verfahren, dass der Antrieb eine Anfangs- und eine Endposition definiert, wobei der Antrieb nach dem Stoppen des Motors in die entgegengesetzte Richtung angetrieben wird, um in die Anfangsposition zurückzufahren. Somit liegt die Pressmaschine nach dem abgeschlossenen Pressvorgang wieder in der Ausgangsposition vor, was bei mehreren Pressvorgängen, beispielsweise für mehrere Werkstücke, ein schnelles Verpressen ermöglicht, da die Pressmaschine vor dem Pressvorgang immer im Anfangszustand vorliegt.

Weiter werden Pressbacken zum Koppeln an die erfindungsgemäße Pressmaschine beschrieben, zum plastischen Verformen eines rohrförmigen Werkstücks, insbesondere eines Fittings, wobei die Pressbacken geeignet sind einen geeigneten Pressdatensatz bereitzustellen. Weiter wird ein rohrförmiges Werkstück beschrieben, insbesondere ein Fitting, zum Verpressen durch die erfindungsgemäße Pressmaschine, wobei das rohrförmige Werkstück geeignet ist einen geeigneten Pressdatensatz bereitzustellen. Somit können die Pressbacken und/oder das rohrförmige Werkstück geeignet sein, dass geeignete Pressdatensätze erzeugt werden, sodass auch bei wiederholtem Einsatz gleicher Pressbacken oder und/oder Werkstücken vergleichbare Pressdaten erzeugt werden können. Die von den erfindungsgemäßen Pressbacken und/oder dem erfindungsgemäßen Werkstück erzeugten Pressdatensätze können hierbei eine vordefinierte maximale Fehlertoleranz aufweisen, sodass mit einer entsprechend hohen Wahrscheinlichkeit von den erzeugten Pressdaten auf die verwendeten Pressbacken und/oder das verpresste Werkstück geschlossen werden kann.

### 4. Beschreibung bevorzugter Ausführungsbeispiele

Im Folgenden wird die vorliegende Erfindung unter Bezugnahme auf die beiliegenden Figuren näher beschrieben. Dabei zeigt:
- Fig. 1: eine schematische Darstellung einer Ausführungsform der Pressmaschine als hydraulisches Handpressgerät gemäß der vorliegenden Erfindung;
- Fig.2: ein Diagramm von Pressparameterkurven für unterschiedliche zu verpressende Werkstoffe eines ersten Fittings bei einer Pressmaschine gemäß dem Stand der Technik;
- Fig.3: ein Diagramm von Pressparameterkurven für unterschiedliche zu verpressende Werkstoffe eines zweiten Fittings bei einer Pressmaschine gemäß dem Stand der Technik.

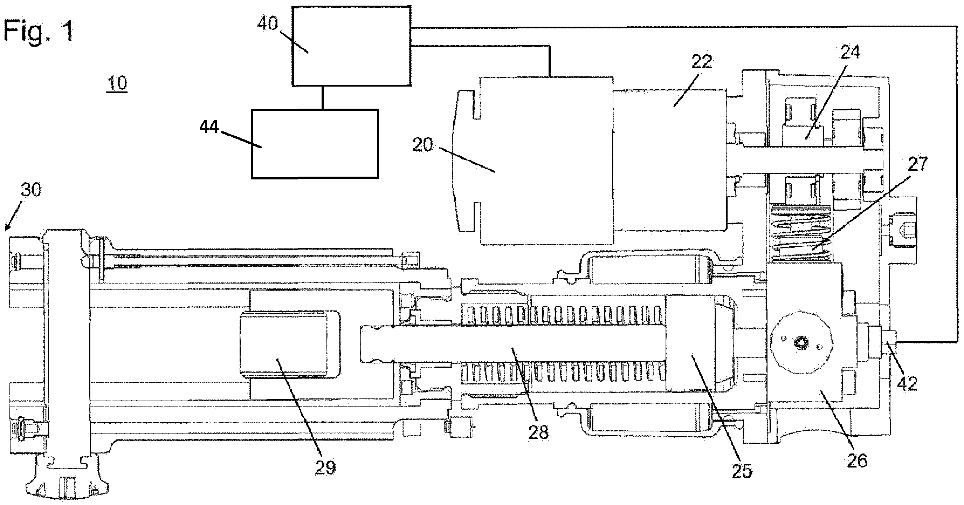

Fig. 1 zeigt eine Ausführungsform eines hydraulischen Handpressgeräts bzw. einer Pressmaschine 10 mit hydraulischer Kraftübertragungseinheit. Bei diesem hydraulischen Handpressgerät treibt ein Motor 20 über ein Getriebe 22 einen daran angeschlossenen Exzenter 24 an. Bevorzugt ist der Motor 20 ein bürstenloser Motor, der von einer Steuerung 40 mit entsprechend moduliertem Strom aus einem Akku oder einer kabelgebundenen Stromversorgung (nicht dargestellt) versorgt wird. Das Getriebe 22 reduziert die Drehzahl des Motors 20 und erhöht das Drehmoment. Der an das Getriebe angeschlossene Exzenter 24 wandelt die Drehbewegung der Ausgangswelle des Getriebes 22 in eine eindimensionale oszillierende Bewegung um, um eine Kolbenpumpe 27 des hydraulischen Systems 26 anzutreiben. Die Kolbenpumpe 27 pumpt aufgrund ihrer Bewegung eine Hydraulikflüssigkeit aus einem Reservoir in einen Arbeitszylinder 25, wodurch der Hydraulikdruck im Arbeitszylinder 25 ansteigt. Der steigende Hydraulikdruck drückt einen im Zylinder beweglich geführten Kolben 28 in der Darstellung der Fig. 1 nach links, in Richtung des Befestigungsbereichs 30 für austauschbare Pressbacken (nicht im Detail dargestellt). Durch die Verwendung eines großen Kolbendurchmessers kann der Kolben 28 sehr hohe Drücke auf die Pressbacken übertragen. Der Kolben 28 ist mechanisch mit Rollen 29 verbunden, welche sich mit der Bewegung des Kolbens 28 mitbewegen. Die Rollen 29 bewegen sich in üblicher Weise zwischen geneigte Enden von Pressbacken, die somit geschlossen werden und das Werkstück mit hoher Kraft plastisch verformen können. Im Betrieb überträgt sich dadurch der Hydraulikdruck direkt proportional auf die angeschlossenen Pressbacken und erzeugt eine dem Hydraulikdruck direkt proportionale Presskraft auf das Werkstück. Durch den beim Verpressen steigenden Hydraulikdruck und die damit steigende Presskraft auf das Werkstück bzw. das Fitting, wird das Werkstück verpresst und plastisch verformt. Über eine Messung des Hydraulikdrucks kann die Presskraft am Werkzeug bestimmt werden. Der Hydraulikdruck in dem hydraulischen System 26 kann auf einfache Weise mittels eines Drucksensors 42 gemessen werden. Der Drucksensor 42 übermittelt das gemessene Drucksignal über Signalleitungen oder drahtlos mit Hilfe einer entsprechenden Funkübertragung an die Steuerung 40. Drahtlose Signalübertragungsmittel, wie beispielsweise gängige digitale Drahtlosverbindungen wie z.B. Bluetooth, NFC oder dergleichen können verwendet werden. Analoge Signale des Drucksensors 42 können in einem A/D-Wandler in digitale Signale umgewandelt werden, damit diese von der digitalen Steuerung 40 ausgewertet werden können. Die Steuerung 40 weist dazu zumindest eine digitale Recheneinheit, wie einen Mikrocontroller, DSP, FPGA, ASIC oder dergleichen auf. Weiter ist eine Datenbank 44 vorgesehen, in der vorbestimmte Werte, die für die Auswertung und Steuerung erforderlich sind, abgerufen werden können, welche mit der Steuerung 40 gekoppelt ist. In Abhängigkeit der Auswertungsergebnisse, gibt die Steuerung 40 über eine Leistungselektronik (nicht dargestellt) entsprechende Steuersignale an den Motor 20 aus. Der Motor 20 wird mit Hilfe dieser Steuersignale angesteuert, um ihm mit einer bestimmten geregelten Drehzahl zu betreiben und ihn am Ende des Pressvorgangs anzuhalten.

In einer anderen nicht dargestellten Ausführungsform kann die Pressmaschine auch als ein rein mechanisches Handpressgerät mit mechanischer Kraftübertragungseinheit ausgebildet sein. Bei einem mechanischen Handpressgerät erzeugt ein Motor eine Drehbewegung, die über ein Getriebe auf zumindest eine mechanische Kraftübertragungseinheit, beispielsweise ein Hebel- oder ein Gewindetrieb, übertragen wird. Die mechanische Kraftübertragungseinheit wandelt die Drehbewegung in eine lineare Bewegung um, die, entsprechend dem oben beschriebenen hydraulischen Handpressgerät 10 der Fig. 1, Rollen mit hoher Kraft verschiebt, die die Pressbacken bewegen. Durch die steigende Kraft der Pressbacken wird ein Werkstück, beispielsweise ein Fitting, dass sich zwischen den Pressbacken befindet, plastisch verformt. Kraftsensoren, zum Messen der vom Motor auf das Werkzeug übertragenen Kraft können an verschiedenen Stellen in dem mechanischen Handpressgerät angeordnet sein, um eine der Presskraft proportionale Kraft zu messen und an die Steuerung zu signalisieren. Weiterhin verhält sich der vom Motor 20 aufgenommene Strom ebenfalls proportional zum Motordrehmoment und somit zur Presskraft an den Pressbacken.

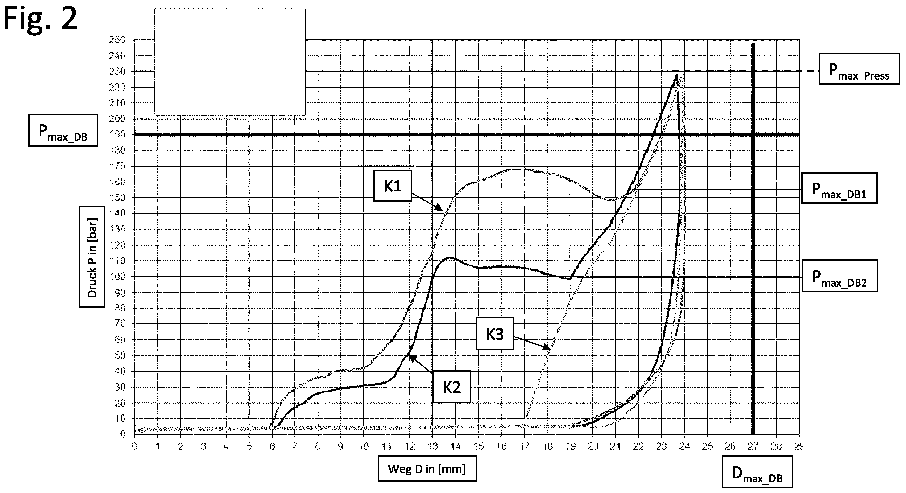

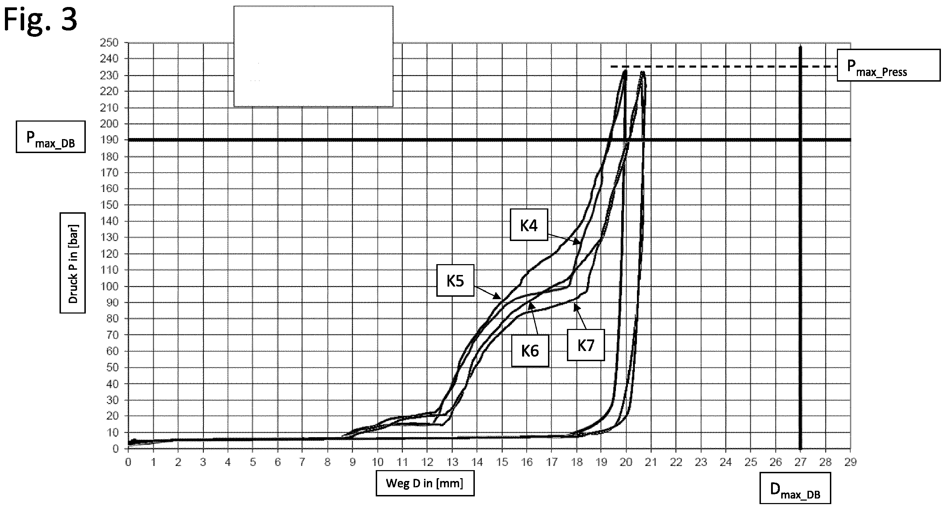

Figuren 2 und 3 zeigen Presskurven K1 bis K7 für jeweils unterschiedliche Fittings unterschiedlicher Materialien und Größen. Die Presskurven beschreiben jeweils den auf das Fitting aufgebrachten Pressdruck P in Abhängigkeit vom zurückgelegten Hubweg D des Arbeitskolbens. Figur 2 zeigt dabei Presskurven eines Fittings mit 22 mm Durchmesser, wobei K1 die Presskurve für ein Fitting darstellt welches aus rostfreiem Stahl (INOX) besteht und wobei die Kurve K2 die Presskurve für ein Fitting darstellt welches aus Kupfer besteht. K3 stellt eine Verpressung ohne Fitting dar. Hierbei sind beim Druckanstieg die Pressbacken geschlossen. Wenn die Kurve K1 bzw. K2 dieselbe Steigung beim Druckanstieg aufweisen wie die Kurve K3, wird dadurch angezeigt, dass das Fitting maximal verformt ist und die Pressbacken geschlossen sind. Dieser Punkt der vollständigen Verformung der jeweiligen Fittings ist in Figur 2 als P_{max_DB1} bzw. P_{max_DB2} dargestellt. Die Presskurven K4 bis K7 der Figur 3 zeigen den Druckverlauf beim Verpressen für Kunststofffittings mit 18 mm Durchmesser. Wie in den Figuren 2 und 3 gezeigt, beginnt der Druckanstieg für das kleinere Fitting mit 18 mm Durchmesser erst bei ungefähr 9 mm Hubweg, wohingegen der Druckanstieg bei dem größeren Fitting mit 22 mm Durchmesser früher erfolgt, nämlich bei ungefähr 6 mm Hubweg. Bei größeren Fittings kommen die Backen früher in Kontakt mit der Oberfläche des Fittings und daher beginnt der Pressvorgang und damit der Druckanstieg im Arbeitszylinder früher, das heißt, wenn sich der Arbeitskolben erst wenige Millimeter bewegt hat. Weiter stellt D_{max_DB} einen in der Datenbank gespeicherten Wert für den maximalen Hubweg, P_{max_DB} einen in der Datenbank gespeicherten Wert für den maximalen Druck dar. Weiter stellt P_{max_Press} einen maximalen Wert für einen Druck dar, der Durch die Pressmaschine gemäß dem Stand der Technik ausgeübt werden kann. Ein geeignetes Verpressen wäre bereits bei entsprechenden Drücken P_{max_DB1}, P_{max_DB2} bzw. P_{max_DB} erreicht, jedoch baut die Pressmaschine im Stand der Technik über diesen Wert hinaus Druck auf. Erfindungsgemäß wird, wenn eine bestimmte Presskurve erkannt wird, der Pressvorgang so gesteuert, dass der Druck nur bis zu dem vorbestimmten Wert P_{max_DB} aufgebaut wird. Anschließend wird der Motor gestoppt und der Arbeitskolben wird in seine Anfangsposition zurückgefahren. Somit kann der Motor früher gestoppt werden, sodass nur ein verringerter maximaler Druck P_{max_DB} während des Pressvorgangs für ein vollständiges Verpressen aufgewandt werden muss.

### Bezugszeichenliste

- 10: Pressmaschine
- 20: Motor
- 22: Getriebe
- 24: Exzenter
- 25: Arbeitszylinder
- 26: hydraulisches System
- 27: Kolbenpumpe
- 28: Kolben
- 29: Rollen
- 30: Befestigungsbereich für austauschbares Werkzeug
- 40: Steuerung
- 42: Drucksensor
- 44: Datenbank
- K1-K7: Presskurven

## Patentansprüche

1. Pressmaschine (10), zum plastischen Verformen eines rohrförmigen Werkstücks,
insbesondere eines Fittings, die Pressmaschine (10) umfassend:
Pressbacken;
einen Antrieb, eingerichtet zum Antreiben der Pressbacken, um eine Kraft auf das Werkstück aufzubringen;
ein Sensorsystem, welches eingerichtet ist, einen Pressdatensatz während eines Pressvorgangs aufzunehmen, um die Pressbacken und/oder das Werkstück automatisch zu identifizieren; **gekennzeichnet durch**
eine Steuerung (40), die eingerichtet ist, anhand des aufgenommenen Pressdatensatzes den Antrieb automatisch auf das Werkstück und/oder die Pressbacken während des Pressvorgangs angepasst zu steuern, um eine individuelle Presskraft aufzubringen,
ein Speichermedium mit einer Datenbank (44), welche zumindest einen gespeicherten Pressdatensatz für einen Pressvorgang von zumindest einer Art von Pressbacken und/oder zumindest einer Art von rohrförmigen Werkstücken umfasst,
wobei der zumindest eine aufgenommene Pressdatensatz eine erste Presskurve (K1, K2, K3, K4, K5, K6, K7) darstellt und wobei der zumindest eine gespeicherte Pressdatensatz eine zweite Presskurve (K1, K2, K3, K4, K5, K6, K7) darstellt und wobei die Verläufe der ersten und der zweiten Presskurve (K1, K2, K3, K4, K5, K6, K7) auf Übereinstimmung überprüft werden und wobei der Antrieb bei Übereinstimmung der ersten und zweiten Presskurve (K1, K2, K3, K4, K5, K6, K7) entsprechend des gespeicherten Pressdatensatzes gesteuert wird.

2. Pressmaschine (10) nach dem vorhergehenden Anspruch, wobei die Steuerung (40) eingerichtet ist den aufgenommenen Pressdatensatz mit dem zumindest einen gespeicherten Pressdatensatz zu vergleichen und den Antrieb anhand des aufgenommenen Pressdatensatzes zu steuern, wenn der zumindest eine aufgenommene Pressdatensatz zumindest einem entsprechenden gespeicherten Pressdatensatz zugeordnet wird.

3. Pressmaschine (10) nach einem der Ansprüche 1 oder 2, wobei die Datenbank (44) zumindest einen spezifischen Steuerparameter zum Steuern des Antriebs umfasst,
wobei der zumindest eine spezifische Steuerparameter einem entsprechenden gespeicherten Pressdatensatz zugeordnet ist,
wobei der zumindest eine spezifische Steuerparameter Pressparameter umfasst, insbesondere eine maximale Presskraft, einen Pressweg und/oder eine Pressdauer und/oder wobei der zumindest eine spezifische Steuerparameter Antriebsparameter umfasst, insbesondere eine Antriebsdrehzahl, Antriebsleistung und/oder einen Öldruck.

4. Pressmaschine (10) nach dem vorhergehenden Anspruch, wobei der Antrieb anhand des zumindest eines spezifischen Steuerparameters gesteuert wird, wenn der zumindest eine aufgenommene Pressdatensatz zumindest einem entsprechenden gespeicherten Pressdatensatz zugeordnet wird.

5. Pressmaschine (10) nach dem vorhergehenden Anspruch, wobei der Antrieb eingerichtet ist, anhand unspezifischer Steuerparameter gesteuert zu werden, wenn der zumindest eine aufgenommene Pressdatensatz nicht zumindest einem entsprechenden gespeicherten Pressdatensatz zugeordnet wird,
wobei der zumindest eine unspezifische Steuerparameter Pressparameter umfasst, insbesondere eine maximale Presskraft, einen Pressweg und/oder eine Pressdauer und/oder wobei der zumindest eine spezifische Steuerparameter Antriebsparameter umfasst, insbesondere eine Antriebsdrehzahl, Antriebsleistung und/oder einen Öldruck.

6. Pressmaschine (10) nach einem der vorhergehenden Ansprüche, wobei das Sensorsystem eingerichtet ist zur Merkmalserkennung von charakteristischen Merkmalen der Pressbacken und/oder des Werkstücks, insbesondere zur Erkennung von charakteristischen geometrischen und/oder materialspezifischen Merkmalen anhand des aufgenommenen Pressdatensatzes.

7. Pressmaschine (10) nach einem der vorhergehenden Ansprüche, ferner umfassend einen Protokollspeicher, welcher eingerichtet ist zum Speichern der Sensordaten und/oder Steuerungsdaten.

8. Pressmaschine (10) nach einem der vorherigen Ansprüche, wobei die Pressmaschine (10) ein elektrisch angetriebenes hydraulisches oder mechanisches Handpressgerät ist.

9. Verfahren zum Betreiben einer Pressmaschine (10) gemäß einem der Ansprüche 1 bis 8 zum plastischen Verformen eines rohrförmigen Werkstücks, insbesondere eines Fittings, das Verfahren umfassend:
Eingreifen der Pressbacken in das Werkstück; und
Erzeugen von Kraft mittels der Pressbacken auf die Oberfläche des eingegriffenen Werkstücks;
Aufnehmen eines Pressdatensatzes während des Pressvorgangs, um die Pressbacken und/oder das Werkstück automatisch zu identifizieren; **gekennzeichnet durch**
automatisch auf das Werkstück und/oder die Pressbacken angepasstes Steuern des Antriebs während des Pressvorgangs anhand des aufgenommenen Pressdatensatzes, um eine individuelle Presskraft aufzubringen,
Überprüfen der Verläufe der ersten und der zweiten Presskurve auf Übereinstimmung und
Steuern des Antriebs bei Übereinstimmung der ersten und zweiten Presskurve entsprechend des gespeicherten Pressdatensatzes.

10. Verfahren gemäß dem vorherigen Anspruch, wobei anhand des aufgenommen Pressdatensatzes eine plastische Verformung des Werkstücks während des Pressvorgangs ermittelt wird und wobei das Steuern ein Stoppen des Motors (20) umfasst, wenn ermittelt wird, dass keine plastische Verformung des Werkstücks mehr stattfindet.

11. Verfahren gemäß einem dem vorherigen Anspruch, wobei das Verfahren weiter umfasst, dass der Antrieb eine Anfangs- und eine Endposition definiert,
wobei der Antrieb nach dem Stoppen des Motors (20) in die entgegengesetzte Richtung angetrieben wird, um in die Anfangsposition zurückzufahren.

## Claims

1. A pressing machine (10) for plastically deforming a tubular workpiece,
in particular a fitting, the pressing machine (10) comprising:
press jaws;
a drive configured to drive the press jaws to apply a force to the workpiece;
a sensor system configured to record a press data set during a pressing operation to automatically identify the press jaws and/or the workpiece; **characterized by**
a controller (40) configured to automatically control the drive adapted to the workpiece and/or the press jaws during the pressing operation based on the recorded press data set to apply an individual pressing force,
a storage medium with a database (44) comprising at least one stored press data set for a pressing operation of at least one type of press jaws and/or at least one type of tubular workpieces,
wherein the at least one recorded press data set represents a first press curve (K1, K2, K3, K4, K5, K6, K7) and wherein the at least one stored press data set represents a second press curve (K1, K2, K3, K4, K5, K6, K7) and wherein the courses of the first and the second press curve (K1, K2, K3, K4, K5, K6, K7) are checked for agreement and wherein the drive is controlled according to the stored press data set if the first and the second press curve (K1, K2, K3, K4, K5, K6, K7) agree.

2. The pressing machine (10) according to the preceding claim, wherein the controller (40) is configured to compare the recorded press data set with the at least one stored press data set to control the drive based on the recorded press data set if the at least one recorded press data set is assigned to at least one corresponding stored press data set.

3. The pressing machine (10) according to one of claims 1 or 2, wherein the database (44) comprises at least one specific control parameter for controlling the drive,
wherein the at least one specific control parameter is assigned to a corresponding stored press data set,
wherein the at least one specific control parameter comprises press parameters, in particular a maximum press force, a press travel and/or a press duration and/or wherein the at least one specific control parameter comprises drive parameters, in particular a drive rotational speed, drive power and/or an oil pressure.

4. The pressing machine (10) according to the preceding claim, wherein the drive is controlled based on the at least one specific control parameter if the at least one recorded press data set is assigned to at least one corresponding stored press data set.

5. The pressing machine (10) according to the preceding claim, wherein the drive is configured to be controlled based on non-specific control parameters if the at least one recorded press data set is not assigned to at least one corresponding stored press data set,
wherein the at least one non-specific control parameter comprises press parameters, in particular a maximum press force, a press travel and/or a press duration and/or wherein the at least one specific control parameter comprises drive parameters, in particular a drive rotational speed, drive power and/or an oil pressure.

6. The pressing machine (10) according to one of the preceding claims, wherein the sensor system is configured for feature recognition of characteristic features of the press jaws and/or the workpiece, in particular for recognition of characteristic geometrical and/or material-specific features based on the recorded press data set.

7. The pressing machine (10) according to one of the preceding claims, further comprising a protocol memory which is configured for storing the sensor data and/or control data.

8. The pressing machine (10) according to one of the preceding claims, wherein the pressing machine (10) is an electrically driven hydraulic or mechanical hand-held pressing device.

9. A method for operating a pressing machine (10) according to one of claims 1 to 8 for plastically deforming a tubular workpiece, in particular a fitting, the method comprising:
engaging the press jaws in the workpiece; and
generating force by means of the press jaws on the surface of the engaged workpiece;
recording a press data set during the pressing operation to automatically identify the press jaws and/or the workpiece; **characterized by**
automatically controlling the drive adapted to the workpiece and/or the press jaws during the pressing operation based on the recorded press data set to apply an individual pressing force,
checking the courses of the first and the second press curve for agreement and
controlling the drive if the first and the second press curve agree according to the stored press data set.

10. The method according to the preceding claim, wherein a plastic deformation of the workpiece during the pressing operation is determined based on the recorded press data set and wherein the controlling comprises stopping the motor (20) if it is determined that plastic deformation of the workpiece no longer takes place.

11. The method according to one of the preceding claim, wherein the method further comprises that the drive defines an initial position and an end position, wherein the drive is driven in the opposite direction after stopping the motor (20) to return to the initial position.

## Revendications

1. Machine à presser (10), pour la déformation plastique d'une pièce tubulaire,
en particulier d'un raccord, la machine à presser (10) comprenant :
des mâchoires de pressage ;
un entraînement, conçu pour l'entraînement des mâchoires de pressage, afin d'appliquer une force sur la pièce ;
un système de capteur, lequel est conçu pour acquérir un ensemble de données de pressage pendant un processus de pressage, afin d'identifier automatiquement les mâchoires de pressage et/ou la pièce ; **caractérisée par**
une commande (40), qui est conçue pour commander automatiquement l'entraînement de manière adaptée à la pièce et/ou aux mâchoires de pressage pendant le processus de pressage à l'aide de l'ensemble de données de pressage enregistré, afin d'appliquer une force de pressage individuelle,
un support de stockage avec une base de données (44), laquelle comprend au moins un ensemble de données de pressage stocké pour un processus de pressage d'au moins un type de mâchoires de pressage et/ou d'au moins un type de pièces tubulaires,
dans laquelle l'au moins un ensemble de données de pressage enregistré représente une première courbe de pressage (K1, K2, K3, K4, K5, K6, K7) et dans laquelle l'au moins un ensemble de données de pressage stocké représente une deuxième courbe de pressage (K1, K2, K3, K4, K5, K6, K7) et dans laquelle les tracés de la première et de la deuxième courbe de pressage (K1, K2, K3, K4, K5, K6, K7) sont contrôlés en vue d'y détecter une concordance et dans laquelle l'entraînement lors d'une concordance de la première et deuxième courbe de pressage (K1, K2, K3, K4, K5, K6, K7) est commandé conformément à l'ensemble de données de pressage stocké.

2. Machine à presser (10) selon la revendication précédente, dans laquelle la commande (40) est conçue pour comparer l'ensemble de données de pressage enregistré à l'au moins un ensemble de données de pressage stocké et pour commander l'entraînement à l'aide de l'ensemble de données de pressage enregistré, lorsque l'au moins un ensemble de données de pressage enregistré est associé à au moins un ensemble de données de pressage stocké correspondant.

3. Machine à presser (10) selon l'une des revendications 1 ou 2, dans laquelle la base de données (44) comprend au moins un paramètre de commande spécifique pour commander l'entraînement,
dans laquelle l'au moins un paramètre de commande spécifique est associé à un ensemble de données de pressage stocké correspondant,
dans laquelle l'au moins un paramètre de commande spécifique comprend des paramètres de pressage, en particulier une force de pressage maximale, une course de pressage et/ou une durée de pressage et/ou dans laquelle l'au moins un paramètre de commande spécifique comprend des paramètres d'entraînement, en particulier une vitesse d'entraînement, une puissance d'entraînement et/ou une pression d'huile.

4. Machine à presser (10) selon la revendication précédente, dans laquelle l'entraînement est commandé à l'aide de l'au moins un paramètre de commande spécifique, lorsque l'au moins un ensemble de données de pressage enregistré est associé à au moins un ensemble de données de pressage stocké correspondant.

5. Machine à presser (10) selon la revendication précédente, dans laquelle l'entraînement est conçu pour être commandé à l'aide de paramètres de commande non spécifiques, lorsque l'au moins un ensemble de données de pressage enregistré n'est pas associé à au moins un ensemble de données de pressage stocké correspondant, dans laquelle l'au moins un paramètre de commande non spécifique comprend des paramètres de pressage, en particulier une force de pressage maximale, une course de pressage et/ou une durée de pressage et/ou dans laquelle l'au moins un paramètre de commande spécifique comprend des paramètres d'entraînement, en particulier une vitesse d'entraînement, une puissance d'entraînement et/ou une pression d'huile.

6. Machine à presser (10) selon l'une des revendications précédentes, dans laquelle le système de capteur est conçu pour l'identification de caractéristiques, pour des caractéristiques distinctives des mâchoires de pressage et/ou de la pièce, en particulier pour l'identification de caractéristiques distinctives géométriques et/ou spécifiques au matériau à l'aide de l'ensemble de données de pressage enregistré.

7. Machine à presser (10) selon l'une des revendications précédentes, comprenant en outre une mémoire de protocole, laquelle est conçue pour stocker les données de capteur et/ou données de commande.

8. Machine à presser (10) selon l'une des revendications précédentes, dans laquelle la machine à presser (10) est un appareil de pressage manuel hydraulique ou mécanique à entraînement électrique.

9. Procédé pour faire fonctionner une machine à presser (10) selon l'une des revendications 1 à 8 pour la déformation plastique d'une pièce tubulaire, en particulier d'un raccord, le procédé comprenant :
l'insertion des mâchoires de pressage dans la pièce ; et la production d'une force au moyen des mâchoires de pressage sur la surface de la pièce insérée ;
l'enregistrement d'un ensemble de données de pressage pendant le processus de pressage, afin d'identifier automatiquement les mâchoires de pressage et/ou la pièce ; **caractérisé par**
la commande automatique de l'entraînement, adaptée à la pièce et/ou aux mâchoires de pressage pendant le processus de pressage à l'aide de l'ensemble de données de pressage enregistré, afin d'appliquer une force de pressage individuelle,
le contrôle des tracés de la première et de la deuxième courbe de pressage en vue d'y détecter une concordance et la commande de l'entraînement lors d'une concordance de la première et deuxième courbe de pressage conformément à l'ensemble de données de pressage stocké.

10. Procédé selon la revendication précédente, dans lequel une déformation plastique de la pièce pendant le processus de pressage est établie à l'aide de l'ensemble de données de pressage enregistré, et dans lequel la commande comprend un arrêt du moteur (20) lorsqu'il est établi qu'aucune déformation plastique de la pièce n'a plus lieu.

11. Procédé selon la revendication précédente, dans lequel le procédé comprend en outre le fait que l'entraînement définit une position initiale et une position finale, dans lequel l'entraînement après l'arrêt du moteur (20) est entraîné dans la direction opposée, afin de retourner dans la position initiale.
